# EUROPÄISCHE PATENTSCHRIFT

(11) **EP 0 784 254 B1**
(45) Veröffentlichungstag und Bekanntmachung des Hinweises auf die Patenterteilung: **27.10.1999**
(21) Anmeldenummer: 96120467.4
(22) Anmeldetag: 19.12.1996
(51) Int. Cl.: G05D 7/00, G05D 5/06, G05D 7/03, G05D 23/26, G05D 7/06, G05D 9/12, F16K 31/02, B01D 3/26

(54) **Vorrichtung zur Regelung des Durchflusses einer Flüssigkeit**
Device for controlling the flow of a liquid
Dispositif de régulation du débit d'un liquide

(30) Priorität: 22.12.1995 DE 19548220
(43) Veröffentlichungstag der Anmeldung: 16.07.1997
(73) Patentinhaber: HAHN-SCHICKARD-GESELLSCHAFT FÜR ANGEWANDTE FORSCHUNG E.V., D-78052 Villingen-Schwenningen (DE)
(72) Erfinder: Rossberg, Rainer, Dr.-Ing., 78050 Villingen-Schwenningen (DE); Nestlen, Wolfgang, Dipl.-Ing., 69221 Dossenheim (DE)
(74) Vertreter: Patentanwälte Westphal, Mussgnug & Partner

(56) Entgegenhaltungen:
- EP-A- 0 284 282
- DE-A- 4 305 924
- DE-A- 4 306 061
- DE-A- 4 320 715
- US-A- 4 599 628
- US-A- 4 611 219

## Beschreibung

Die Erfindung betrifft eine Vorrichtung zur Regelung des Durchflusses einer Flüssigkeit in einem vorzugsweise kapillar dimensionierten Durchflußkanal der im Oberbegriff des Anspruchs 1 angegebener Art.

Regelkreise für derartige Vorrichtungen weisen grundsätzlich einen Sensor, einen elektrischen oder mechanischen Regler und ein Stellglied auf. Da bei der Regelung mechanischer Größen sehr unterschiedliche physikalische Effekte ausgenutzt werden, sind die einzelnen Komponenten derartiger Regelkreise üblicherweise durch spezielle diskrete Baugruppen realisiert, die zu einem Regelsystem zusammengeschaltet werden. Aufgrund der unterschiedlichen Anforderungen sowie Fertigungsmethoden ergeben sich für die Herstellung des kompletten Systems vergleichsweise hohe Fertigungskosten. Abgesehen davon kann es bei der Verbindung der einzelnen Baugruppen technische Schwierigkeiten geben. Solche Schwierigkeiten können sich beispielsweise bei kapillaren Fließsystemen an den Übergangsstellen einzelner Kanäle ergeben, welche aufgrund höheren Fließwiderstandes eine Flußhemmung oder gar Flußunterbrechung bewirken können.

Aus DE 43 05 924 A1 sowie DE 43 06 061 A1 sind konkrete Anwendungsfälle bekannt, bei welchen oben erläuterte Schwierigkeiten auftreten können. Bei diesen Vorrichtungen wird eine Flüssigkeit, die von einem druckbeaufschlagten Vorratsbehälter zugeführt wird, kapillar einer Düse entnommen. Zur Regelung der Flüssigkeitszufuhr wird der Bedarf mittels eines Sensors, der den Flüssigkeitsfüllstand in einer kapillaren Puffer- oder Überlaufkammer überwacht, ermittelt, um entsprechend dem Füllstand die Flüssigkeitszufuhr mittels eines Ventiles zu regeln. Hierfür geeignete Komponenten sind aus den obengenannten Druckschriften bekannt. Aus DE 43 20 715 A1 ist ferner ein gleichfalls miniaturisiertes Ventil bekannt, das für den genannten Anwendungsfall grundsätzlich geeignet ist.

Bei Zusammenschaltung dieser Komponenten ergeben sich die oben erläuterten Schwierigkeiten.

So liegt der vorliegenden Erfindung die Aufgabe zugrunde, eine Vorrichtung zur Regelung des Flüssigkeitsdurchflusses mit Durchflußkanal, Füllstandssensor und Ventil zu schaffen, bei welchem die oben erläuterten Nachteile vermieden sind und dessen Funktionskomponenten insbesondere bei kleinsten Abmessungen preisgünstig herstellbar sind. Gelöst ist diese Aufgabe mit einer Vorrichtung der in Anspruch 1 angegebenen Art.

Die Grundidee der Erfindung besteht darin, alle Funktionskomponenten in einem kompakten Bauelement aus einheitlichem Material zu vereinen. Aufbauend auf der aus den oben genannten Literaturstellen bekannten Technik ist gemäß vorliegender Erfindung auch das Ventil, bestehend aus Ventilplatte und Ventilsitz und einem elektromechanischen Wandler, in diesen Baustein integriert.

Der nach der Erfindung realisierte Baustein beinhaltet drei unterschiedliche Funktionskomponenten:
1. Ein Ventil zur Steuerung des Flüssigkeitsdurchflusses.
2. Eine Puffer- bzw. Überlaufkammer zur Bevorratung und Überwachung der abzugebenden Flüssigkeitsmenge.
3. Einen Sensor zur Überwachung des Flüssigkeitsstandes in der Puffer- bzw. Überlaufkammer, mit dessen Ausgangssignal das Ventil gesteuert wird.

Weiterbildungen und Verbesserungen dieses Erfindungsvorschlages sind Gegenstand der Unteransprüche 2 bis 16.

Gemäß Anspruch 2 ist die Ventilplatte in die Trägerplatte integriert und mit dieser über eine dünnwandige, elastisch verformbare Membran verbunden.

Eine derartige Konfiguration läßt sich am zweckmäßigsten gemäß Anspruch 3 zusammen mit den Kanälen und Kammern durch Ätzen herstellen.

Die Elektroden für den Sensor können dagegen gemäß Anspruch 4 in Form ebener Leiterbahnen auf die zweite Trägerplatte abgeschieden, z. B. aufgedampft oder aufgesputtert, werden.

Soweit Ätzverfahren Anwendung finden, eignet sich für die Trägerplatte ein Siliziumchip. Als Träger für die aufgebrachten Elektroden eignet sich neben Silizium aber auch Borosilikatglas, das einen ähnlichen Ausdehnungskoeffizienten wie Silizium hat und sich mit einem Siliziumchip gemäß Anspruch 6 in einfacher Weise durch Kleben oder Bonden verbinden läßt.

Für die Ansteuerung des Ventils ist gemäß Anspruch 7 ein piezoelektrischer Wandler vorgeschlagen, der unmittelbar an einer der Trägerplatten angebracht sein kann und der Auslenkung der Ventilplatte dient.

Dieser Wandler, der vorzugsweise aus piezoelektrischer Keramik besteht, kann gemäß Anspruch 8 als Biegewandler ausgebildet sein.

Nach Anspruch 9 ist er scheibenförmig ausgebildet und an der Außenseite der die Ventilplatte aufweisenden Trägerplatte durch Kleben oder Bonden befestigt.

Eine noch kompaktere Lösung ergibt sich, wenn gemäß Anspruch 10 ein Schichtwandler zur Auslenkung der Ventilplatte auf die Trägerplatte aufgebracht ist, wobei als Schichtwandler eine piezoelektrische Schicht gemäß Anspruch 11 geeignet ist.

An die von Ventilmembran und Ventilplatte einerseits und Trägerplatte andererseits begrenzte Ventilkammer ist nach einem weiteren Vorschlag gemäß Anspruch 12 der Durchflußkanal kapillar angekoppelt, so daß die Flüssigkeit aus der Ventilkammer durch kapillare Kräfte in den Durchflußkanal transportiert wird.

Als Sensoren eignen sich grundsätzlich optische Sensoren nach DE 43 05 924 A1, kapazitive Sensoren gemäß DE 43 06 061 A1 sowie piezoelektrisch arbeitende Sensoren gemäß DE 43 16 148 A1.

Nach einem weiteren Vorschlag, der auch Gegenstand der gleichzeitig eingereichten Patentanmeldung P.... ist, wird gemäß Anspruch 14 ein Leitfähigkeitssensor vorgeschlagen. Die Elektroden dieses Sensor sind gegenüber der Trägerplatte zu isolieren. Hierbei wird zusätzlich eine Siliziumnitridschicht gem. Anspruch 15 vorgeschlagen.

Dem elektrischen Anschluß der Elektroden dienen gemäß Anspruch 16 Kontaktanschlußflächen, mit welcher Anschlußdrähte vorzugsweise durch Bonden leitend verbunden sind.

Fluidregler der hier beschriebenen Art können in besonders vorteilhafter Weise mittels bekannter Siliziumbearbeitungsverfahren hergestellt werden.

Nach der Prozessierung, also nach der Herstellung der Kanäle und Kammern durch Ätzen, dem Aufbringen der Elektroden und dem Sägen der Platten aus dem Wafer werden diese zusammengefügt und in einem Bond- oder Klebeprozeß miteinander verbunden.

Es ist auch möglich, die Trägerplatten bzw. Chips schon im Waferverbund miteinander zu verbinden und die Reglerbausteine anschließend durch Sägen oder sonstige Trennverfahren herauszutrennen.

Zweckmäßigerweise werden die fertiggestellten Reglerbausteine auf einem Kunststoffträger montiert, z. B. mittels Epoxydharzkleber aufgeklebt. Desgleichen können sie mit Kunststoff umspritzt oder in Kunststoffgehäuseteile eingeschnappt werden.

Soweit der piezoelektrische Biegewandler nicht unmittelbar in eine der Trägerplatten integriert ist, kann dieser nachträglich mittels eines geeigneten Klebstoffes, z. B. eines Zweikomponentenklebers, mit der Trägerplatte verbunden werden.

In gleicher Weise läßt sich ein die Elektronik enthaltender Anschlußblock mit dem Reglerbaustein mechanisch verbinden, wobei die elektrische Verbindung über angebondete Golddrähte erfolgen kann.

Folgende an sich bekannte Arbeitsschritte sind bei der Herstellung der Trägerplatten, der sogenannten Chips, durchzuführen.

### Herstellung des Trägerchips

1. Aus Silizium bestehende Scheibe reinigen.
2. Scheibe beidseitig oxydieren.
3. Auf die Scheibe beidseitig Siliziumnitrid (SI₃ N₄) abscheiden.
4. Zur Herstellung der Leiterbahn-Elektroden Scheibe beidseitig belacken, belichten und entwickeln.
5. Löcher für Ein- und Auslaßöffnungen einseitig öffnen.
6. Löcher in einem Kalilaugenbad (KOH) bis auf eine Restwandstärke von etwa 50 µm ätzen.
7. Aufsputtern einer Chrom-Goldschicht, bei welcher die Chromschicht als Haftschicht dient.
8. Strukturieren der Chrom-Goldschicht zur Herstellung der Elektroden.
9. Fertigätzen der Ein- und Auslaßöffnungen.
10. Beseitigen der Nitridoxydschichten im Bereich der Ein- und Auslaßöffnungen auf der Leiterbahnenseite.

### Herstellung des Kanalchips

1. Aus Silizium bestehende Scheibe reinigen (Si-100, 4", 525 µm, beidseitig poliert).
2. Scheibe oxydieren.
3. Siliziumnitridschicht (SI₃ N₄) abscheiden.
4. Scheibe beidseitig belacken, belichten und entwickeln.
5. Gräben und Durchbrüche in der Nitridoxydschicht beidseitig öffnen.
6. Ätzen der Gräben in einem Kalilaugebad (KOH) bis auf eine Membranstärke von 20 µm. Die Gräben sind hierbei selbststoppend bzw. so kompensiert, daß sie etwa bis zu einer halben Waferstärke geätzt werden.
7. Si₃N₄/Si O₂-Schicht entfernen.
8. Scheibe hydrophilieren.

Der Trägerchip kann, wie einleitend erwähnt, aus Borosilikatglas (Handelsname Pyrexglas) bestehen. In diesem Fall ist eine einfachere Verbindung der Chips durch anodisches Bonden möglich. Hierbei muß im Bereich des Ventils, also der Ventilplatte bzw. der Einlaßöffnung, eine verbindungshindernde Schicht, z. B. eine Chrom-Goldschicht, abgeschieden werden.

Mit dem oben geschilderten Verfahren lassen sich in rationeller Weise alle mechanischen Komponenten des Reglerbausteines in einem Arbeitsgang preisgünstig herstellen, da eine Fertigung mittels einfacher Technologien im Waferverbund durchgeführt werden kann.

Da die kapillaren Kanäle und Kammern in die Trägerplatte eingearbeitet und ohne widerstandserhöhende mechanische Stoßstellen ineinander übergehen, ist eine einfache und zuverlässige Volumenstromführung gewährleistet.

Die planaren Oberflächen der Chips ermöglichen eine einfache Anbringung eines beliebigen hybriden oder integrierten Antriebs, vor- zugsweise in Form einer piezoelektrisch wirkenden Schicht.

Anhand eines einfachen Ausführungsbeispieles, das in der Zeichnung dargestellt ist, ist die Erfindung nachstehend im einzelnen erläutert.

In der Zeichnung zeigen:
- Figur 1: Aufsicht auf die Kanalträgerplatte (Kanalchip),
- Figur 2: Schnitt längs der Linie II-II in Figur 1,
- Figur 3: Aufsicht auf die Elektrodenträgerplatte (Trägerchip),
- Figur 4: Schnitt längs der Linie IV-IV in Figur 3,
- Figur 5: Aufsicht auf den kompletten Reglerbaustein und
- Figur 6: Schnitt längs der Linie VI-VI. in Figur 5.

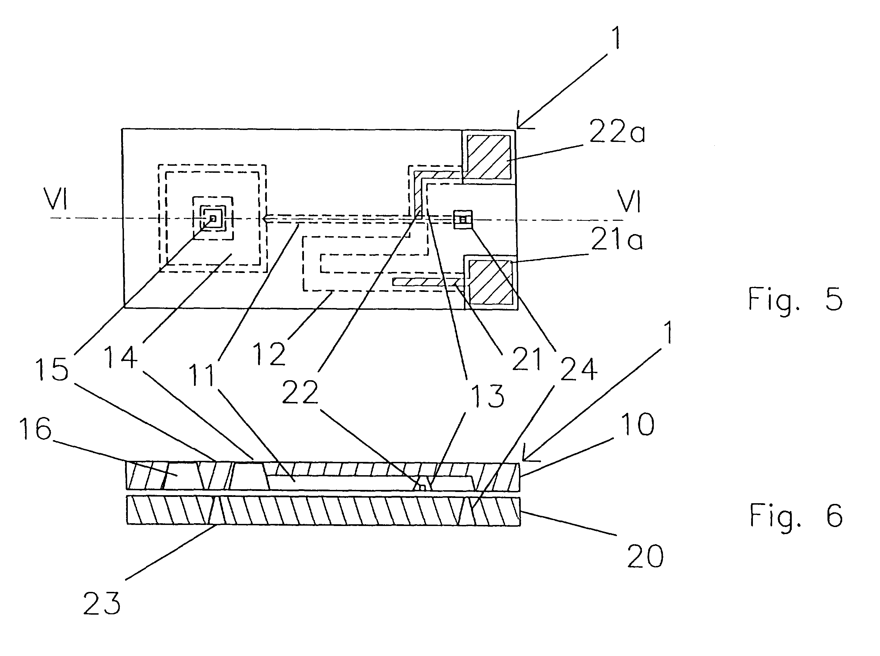

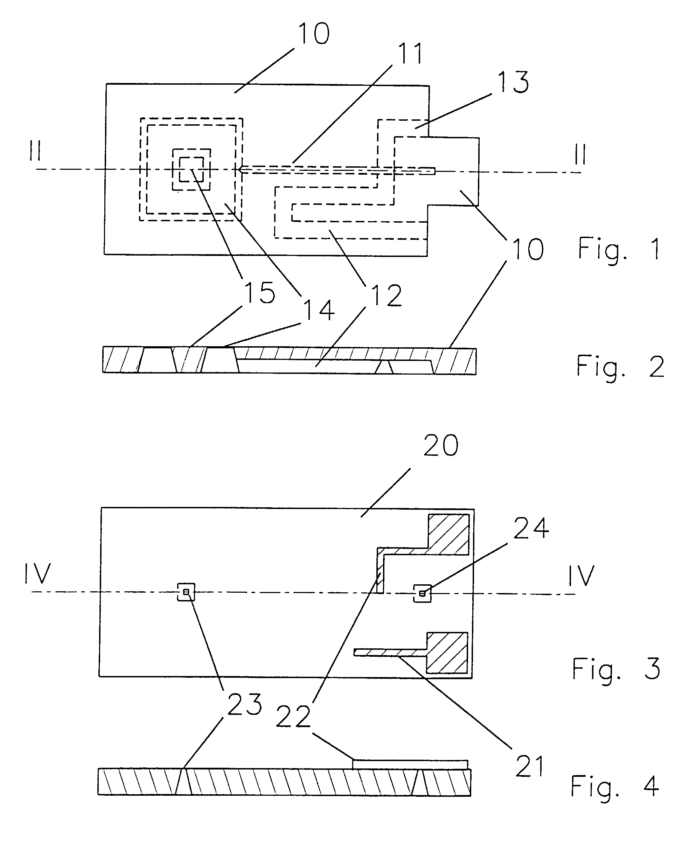

Die Kanalträgerplatte 10, der sogenannte Kanalchip, besteht aus einer dünnwandigen Siliziumplatte, in welche der Durchflußkanal 11 , die Überlaufkammer 12 sowie eine Elektrodenkammer 13 eingeätzt sind. Wie insbesondere Figur 2 veranschaulicht, ist die Trägerplatte 10 auf der in der Zeichnung linken Seite zur Herstellung einer elastisch verformbaren Membran 14 verdünnt, die in ihrer Mitte inselförmig eine Versteifung trägt, die als Ventilplatte oder Ventilteller dient. Der Durchflußkanal 11 mündet in den Bereich der Membran 14 und ist an die Kammer 16, die durch Membran 14 Elektrodenträgerplatte 20 gebildet ist, kapillar angekoppelt.

In das andere Ende des Durchflußkanales 11 münden die Kammern 12 und 13, wobei die Kammer 12 mit einer ersten Elektrode 21 als Überlaufkammer und die Kammer 13 der Aufnahme der 2. Elektrode dienen.

Die diesen Kammern 12 und 13 zugeordneten Elektroden 21 und 22 sind als Leiterbahnen ausgebildet. Deren Kontaktanschlußfläche 21a und 22a befinden sich in einem Bereich, der beim späteren Zusammenfügen der beiden Platten 10 und 20 zur Kontaktierung der Anschlußdrähte freibleiben. Ferner weist die Elektrodenträgerplatte, der Trägerchip 20, Ein- und Auslaßöffnungen 23 und 24 auf, welche einerseits dem Durchlaßkanal 11 und andererseits der Ventilplatte (15) zugeordnet sind.

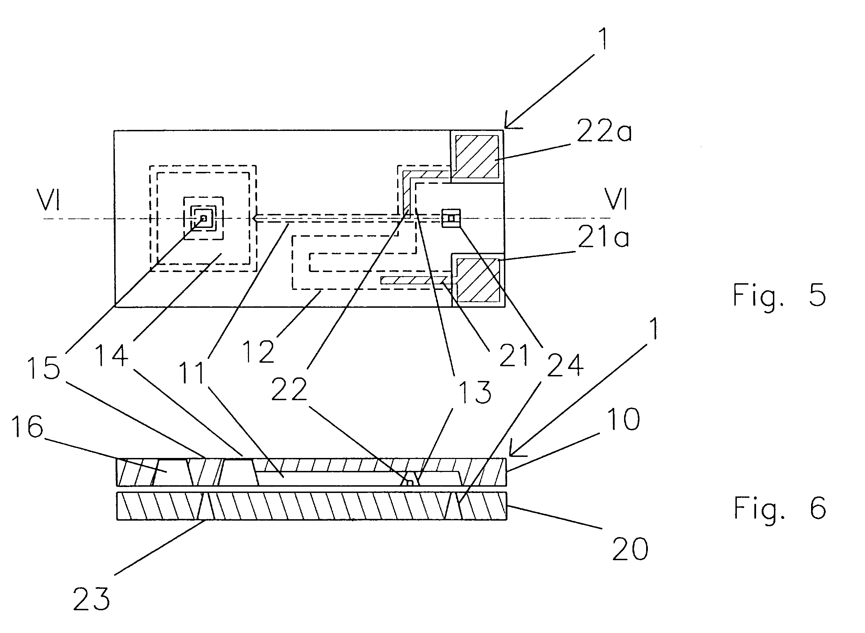

Diese Zuordnung läßt sich genauer den Darstellungen gemäß Figur 5 und 6 entnehmen, welche den komplettierten Reglerbaustein erkennen lassen. Dieser besteht aus den beiden miteinander verbundenen Trägerplatten 10 und 20, welche sowohl den Durchflußkanal 11 als auch die Kammern 12 und 13 begrenzen. Bei dieser Anordnung tritt die Flüssigkeit durch die Ventilöffnung 23 ein, soweit die Ventilplatte 15 mittels eines hier nicht dargestellten Wandlers angehoben und damit das Ventil geöffnet ist. Die Flüssigkeit sammelt sich in der Ventilkammer 16 und wird aus dieser aufgrund kapillarer Kräfte in den Durchflußkanal 11 gesogen, um den Regler durch die Auslaßöffnung 24 wieder zu verlassen. Soweit das Flüssigkeitsangebot größer als der Flüssigkeitsbedarf ist, füllt sich die Überlauf- bzw. Pufferkammer 12. Am Ende dieser Kammer ist die in Form einer Leiterbahn ausgebildete Elektrode 21 vorgesehen, welche mit der Flüssigkeit bei vollständiger Füllung der Überlaufkammer 12 in galvanischen Kontakt gelangt. Gleichzeitig ist die zweite Elektrode 22, die in der Kammer 13 angeordnet ist, mit der Flüssigkeit in galvanischem Kontakt. Der zwischen den Elektroden 21 und 22 bzw. den mit diesen verbundene Kontaktanschlußflächen 21a und 22a, mit welchen die vorzugsweise aus Gold bestehende Anschlußdrähte elektrisch verbunden, z. B. angebondet sind, dient der Füllstandsüberwachung.

### Bezugszeichenliste

- 1: Reglerbaustein (Reglermodul)
- 10: Trägerplatte für Kanäle (Kanalchip)
- 11: Durchflußkanal
- 12: Puffer- bzw. Überlaufkammer
- 13: Elektrodenkammer
- 14: Ventilmembran
- 15: Ventilplatte
- 16: Ventilkammer

- 20: Trägerplatte für Elektroden (Trägerchip)
- 21, 22: Elektroden bzw. Leiterbahnen für Elektroden
- 21a, 22a: Kontaktanschlußflächen
- 23: Einlaßöffnung als Ventilöffnung und Ventilsitz
- 24: Auslaßöffnung

## Patentansprüche

1. Vorrichtung zur Regelung des Durchflusses einer Flüssigkeit in einem Ein- und Auslaß aufweisenden Durchflußkanal, bestehend aus einer Überlaufkammer, welche zwischen Ein- und Auslaß fluidmäßig mit dem Durchlaßkanal verbunden ist, einem Sensor mit Elektroden zur Überwachung des Flüssigkeitsstandes in der Überlaufkammer sowie einem elektrisch in Abhängkeit vom Füllstand steuerbaren Ventil, welches den Ein- oder Auslaß sperrt bzw freigibt, dadurch gekennzeichnet, daß der Durchflußkanal (11), die Überlaufkammer (12) und eine auslenkbare Ventilplatte (15) des Ventils in einer ersten Trägerplatte (10) und die Elektroden (21, 22) des Sensors sowie die Ein- und Auslässe (23, 24) in einer zweiten Trägerplatte (20) angeordnet sind, wobei der Ein- bzw. Auslaß (23, 24) den Ventilsitz bildet, daß die beiden Platten (10, 20) miteinander zu einem kompakten Baustein verbunden sind und daß der Ventilplatte (15) ein elektromechanischer Wandler zur Steuerung des Ventils (14, 15, 23) zugeordnet ist.

2. Vorrichtung nach Anspruch 1, dadurch gekennzeichnet, daß die Ventilplatte (15) mit der Trägerplatte (10) über eine dünnwandige, elastisch verformbare Membran (14) verbunden ist.

3. Vorrichtung nach Anspruch 1 oder 2, dadurch gekennzeichnet, daß mindestens die erste Trägerplatte (10) aus einem Siliziumchip besteht, bei welchem die Kanäle (11) und Kammern (12) sowie die die Ventilplatte (15) tragende Membran (14) durch Ätzen hergestellt sind.

4. Vorrichtung nach Anspruch 1, 2 oder 3, dadurch gekennzeichnet, daß die Elektroden (21, 22) in Form ebener Leiterbahnen auf die zweite Trägerplatte (20) aufgedampft oder aufgesputtert sind.

5. Vorrichtung nach Anspruch 4, dadurch gekennzeichnet, daß die zweite Trägerplatte (20) aus Silizium bzw. Borosilikatglas besteht.

6. Vorrichtung nach einem der Ansprüche 1 bis 5, dadurch gekennzeichnet, daß die Trägerplatten (10, 20) durch Kleben oder Bonden miteinander bleibend verbunden sind.

7. Vorrichtung nach einem der Ansprüche 1 bis 6, dadurch gekennzeichnet, daß die die Ventilplatte (15) aufweisende Trägerplatte (10) mit einem piezoelektrischen Wandler zur Auslenkung der Ventilplatte (15) versehen ist.

8. Vorrichtung nach Anspruch 7, dadurch gekennzeichnet, daß der vorzugsweise aus Keramik bestehende piezoelektrische Wandler ein Biegewandler ist.

9. Vorrichtung nach Anspruch 7 oder 8, dadurch gekennzeichnet, daß der Wandler scheibenförmig ausgebildet und an der Außenseite der die Ventilplatte (15) aufweisenden Trägerplatte (10) vorzugsweise durch Kleben oder Bonden befestigt ist.

10. Vorrichtung nach einem der Ansprüche 1 bis 6, dadurch gekennzeichnet, daß die Trägerplatte einen in diese integrierten Schichtwandler zur Auslenkung der Ventilplatte aufweist.

11. Vorrichtung nach Anspruch 10, dadurch gekennzeichnet, daß der Schichtwandler durch eine auf die Trägerplatte aufgebrachte piezoelektrische Schicht gebildet ist.

12. Vorrichtung nach einem der Ansprüche 1 bis 10, dadurch gekennzeichnet, daß die Ventilmembran (14) mit der Ventilplatte (15) und die Trägerplatte (20) eine Ventilkammer (16) begrenzen, an welche der Durchflußkanal (11) kapillar angekoppelt ist.

13. Vorrichtung nach einem der Ansprüche 1 bis 12, dadurch gekennzeichnet, daß die Überlaufkammer (12) im Vergleich zum Durchflußkanal (11) einen großen Querschnitt aufweist.

14. Vorrichtung nach einem der Ansprüche 1 bis 13, dadurch gekennzeichnet, daß der Überlaufkammer (12) und dem Durchflußkanal (11) jeweils eine metallische Elektrode (21, 22) zugeordnet ist, welche mit der in der Überlaufkammer (12) bzw. dem Durchflußkanal (11) befindlichen Flüssigkeit in galvanischen Kontakt gelangt, und daß die beiden Elektroden (21, 22) der Leitfähigkeitsmessung des in der Überlaufkammer (12) befindlichen Mediums dienen.

15. Vorrichtung nach einem der Ansprüche 1 bis 14, dadurch gekennzeichnet, daß die metallischen Elektroden (21, 22) gegenüber der Oberfläche der Trägerplatte (20) durch eine Siliziumnitrid (Si₃ N₄)-Schicht isoliert sind.

16. Vorrichtung nach einem der Ansprüche 1 bis 15, dadurch gekennzeichnet, daß die Elektroden (21, 22) mit Kontaktanschlußflächen (21a, 22a) versehen sind, mit welchen die Trägerplatte (20) durchsetzende Anschlußdähte vorzugsweise durch Bonden elektrisch leitend verbunden sind.

## Claims

1. A device for controlling the flow of a liquid in a flow channel having an inlet and an outlet, consisting of an overflow chamber, which is connected by fluid with the flow channel between inlet and outlet, a sensor with electrodes for monitoring the fluid level in the overflow chamber and also a valve controllable electrically in dependence on the level, which blocks and unblocks the inlet or outlet,
**characterised in that** the flow channel (11), the overflow chamber (12) and a deflectable valve plate (15) of the valve are disposed in a first wafer crystal (10) and the electrodes (21, 22) of the sensor and also the inlets and outlets (23, 24) are disposed in second wafer crystal (20), the inlet and outlet (23, 24) forming the valve seat,
**in that** the two wafer crystals (10, 20) are connected to one another to form a complete module,
**and in that** an electromechanical transducer for controlling the valve (14, 15, 23) is associated with the valve plate (15).

2. A device according to Claim 1,
**characterised in that** the valve plate (15) is connected to the wafer crystal (10) via a thin-walled, elastically deformable membrane (14).

3. A device according to Claim 1 or 2,
**characterised in that** at least the first wafer crystal (10) is made from a silicon chip, in which the channels (11) and chambers (12) and also the membrane (14) bearing the valve plate (15) are produced by etching.

4. A device according to Claim 1, 2 or 3,
**characterised in that** the electrodes (21, 22) are vapour-deposited or sputtered in the form of flat track conductors on the second wafer crystal (20).

5. A device according to Claim 4,
**characterised in that** the second wafer crystal (20) is made of silicon or borosilicate glass.

6. A device according to one of Claims 1 to 5,
**characterised in that** the wafer crystals (10, 20) are connected permanently to one another by sticking or bonding.

7. A device according to one of Claims 1 to 6,
**characterised in that** the wafer crystal (10) having the valve plate (15) is provided with a piezoelectric transducer for deflecting the valve plate (15).

8. A device according to Claim 7,
**characterised in that** the piezoelectric transducer preferably made of ceramics is a bending transducer.

9. A device according to Claim 7 or 8,
**characterised in that** the transducer has a sandwich construction and is attached to the outside of the wafer crystal (10) comprising the valve plate (15) preferably by sticking or bonding.

10. A device according to one of Claims 1 to 6,
**characterised in that** the wafer crystal has a sandwich transducer integrated therein for deflecting the valve plate.

11. A device according to Claim 10,
**characterised in that** the sandwich transducer is formed by a piezoelectric layer applied to the wafer crystal.

12. A device according to one of Claims 1 to 10,
**characterised in that** the valve membrane (14) with the valve plate (15) and the wafer crystal (20) delimit a valve chamber (16), to which the flow channel (11) is coupled by capillary action .

13. A device according to one of Claims 1 to 12,
**characterised in that** the overflow chamber (12) has a large cross section in comparison with the flow channel (11).

14. A device according to one of Claims 1 to 13,
**characterised in that** associated respectively with the overflow chamber (12) and the flow channel (11) is a metal electrode (21, 22), which comes into electrical contact with the fluid situated in the overflow chamber (12) and the flow channel (11),
**and in that** the two electrodes (21, 22) serve for the conductivity measurement of the medium present in the overflow chamber (12).

15. A device according to one of Claims 1 to 14,
**characterised in that** the metallic electrodes (21, 22) are insulated with respect to the surface of the wafer crystal (20) by a layer of silicon nitride (Si₃N₄).

16. A device according to one of Claims 1 to 15,
**characterised in that** the electrodes (21, 22) are provided with contact bond pads (21a, 22a), with which connecting wires passing through the wafer crystal (20) are preferably connected in a an electrically conductive manner by bonding.

## Revendications

1. Dispositif de régulation du débit d'un liquide dans un canal d'écoulement présentant une entrée et une sortie, comportant une chambre de trop-plein en liaison liquide avec le canal entre l'entrée et la sortie de celui-ci, un détecteur à électrodes pour surveiller l'état du liquide dans la chambre de trop-plein ainsi qu'une soupape commandable électriquement en fonction du niveau de remplissage, cette soupape obturant ou libérant l'entrée ou la sortie,
caractérisé en ce que
le canal d'écoulement (11), la chambre de trop-plein (12) et une plaque (15) de soupape déviable sont montées dans une première plaque porteuse (10) tandis que les électrodes (21, 22) du détecteur ainsi que l'entrée (23) et la sortie (24) sont montées dans une seconde plaque porteuse (20), l'entrée ou la sortie (23, 24) formant le siège de soupape, les deux plaques (10, 20) étant reliées entre elles de manière à former une unité compacte et un convertisseur électromécanique commandant la soupape (14, 15, 23) étant associé à la plaque de soupape (15).

2. Dispositif selon la revendication 1,
caractérisé en ce que
la plaque de soupape (15) est reliée à la plaque porteuse (10) par l'intermédiaire d'une membrane mince (14), déformable élastiquement.

3. Dispositif selon une des revendications 1 ou 2,
caractérisé en ce qu'
au moins la première plaque porteuse (10) est constituée par un chip de silicium dans lequel sont réalisés par attaque chimique les canaux (11) et les chambres (12) ainsi que la membrane (14) portant la plaque de soupape (15).

4. Dispositif selon les revendications 1, 2 ou 3,
caractérisé en ce que
les électrodes (21, 22) ayant la forme des pistes conductrices planes sont vaporisées ou pulvérisées sur la seconde plaque porteuse (20).

5. Dispositif selon la revendication 4,
caractérisé en ce que
la seconde plaque porteuse (20) est en silicium ou en verre de borosilicate.

6. Dispositif selon une des revendications 1 à 5,
caractérisé en ce que
les plaques porteuses (10, 20) sont reliées entre elles de manière permanente par collage ou bonding.

7. Dispositif selon une des revendications 1 à 6,
caractérisé en ce que
la plaque porteuse (10) comportant la plaque de soupape (15) est équipée d'un convertisseur piézo-électrique servant à dévier la plaque de soupape (15).

8. Dispositif selon la revendication 7,
caractérisé en ce que
le convertisseur piézo-électrique, en céramique de préférence, est un convertisseur de flexion.

9. Dispositif selon la revendication 7 ou 8,
caractérisé en ce que
le convertisseur a la forme d'un disque fixé par collage ou bonding sur la face externe de la plaque porteuse (10) équipée de la plaque de soupape (15).

10. Dispositif selon une des revendications 1 à 6,
caractérisé en ce que
la plaque porteuse comporte, intégré à cette plaque, un convertisseur laminaire intégré servant à dévier la plaque de soupape.

11. Dispositif selon la revendication 10,
caractérisé en ce que
le convertisseur laminaire est constitué par une couche piézo-électrique déposée sur la plaque porteuse.

12. Dispositif selon une des revendications 1 à 10,
caractérisé en ce que
la membrane de soupape (14), la plaque de soupape (15) et la plaque porteuse (20) délimitent une chambre de soupape (16) à laquelle est accouplée de manière capillaire le canal d'écoulement (11).

13. Dispositif selon une des revendications 1 à 12,
caractérisé en ce que
la chambre de trop-plein (12) présente, par rapport au canal d'écoulement (11) une grande section.

14. Dispositif selon une des revendications 1 à 13,
caractérisé en ce qu'
à la chambre de trop-plein (12) et au canal d'écoulement (11) sont associés respectivement une électrode métallique (21, 22) qui vient en contact électrique avec le liquide se trouvant dans la chambre (12) ou dans le canal (11), ces deux électrodes servant à mesurer la conductivité du milieu se trouvant dans la chambre de trop-plein (12).

15. Dispositif selon une des revendications 1 à 14,
caractérisé en ce que
les électrodes métalliques (21, 22) sont isolées par rapport à la surface de la plaque porteuse (20), au moyen d'une couche de nitrure de silicium Si₃N₄.

16. Dispositif selon une des revendications 1 à 15,
caractérisé en ce que
les électrodes (21, 22) sont prévues avec des surfaces de raccords de contact (21a, 22a) auxquelles sont reliés, de préférence par bonding, des fils de raccordement électrique traversant la plaque porteuse (20).
